(19) **Europäisches Patentamt**

**European Patent Office**

**Office européen des brevets**

(11) Publication number : **0 661 245 A2**

(12) **EUROPEAN PATENT APPLICATION**

(21) Application number : **94309723.8**

(22) Date of filing : **22.12.94**

(51) Int. Cl.$^6$ : **C04B 35/587**

(30) Priority : **27.12.93 JP 348400/93**

(43) Date of publication of application :
**05.07.95 Bulletin 95/27**

(84) Designated Contracting States :
**DE FR GB**

(71) Applicant : **HONDA GIKEN KOGYO
KABUSHIKI KAISHA
1-1, 2-chome
Minami-Aoyama
Minato-ku, Tokyo (JP)**

(72) Inventor : **Iwamoto, Jun**
c/o K.K. Honda Gijutsu Kenkuyko,
**4-1, Chuo 1-chom
Wako-shi, Saitama-ken (JP)**
Inventor : **Kamide, Naoki**
c/o K.K. Honda Gijutsu Kenkuyko,
**4-1, Chuo 1-chom
Wako-shi, Saitama-ken (JP)**
Inventor : **Ota, Naoki**
c/o K.K. Honda Gijutsu Kenkuyko,
**4-1, Chuo 1-chom
Wako-shi, Saitama-ken (JP)**
Inventor : **Kawakami, Yasunobu**
c/o K.K. Honda Gijutsu Kenkuyko,
**4-1, Chuo 1-chom
Wako-shi, Saitama-ken (JP)**

(74) Representative : **Calamita, Roberto
Frank B. Dehn & Co.
Imperial House
15-19 Kingsway
London WC2B 6UZ (GB)**

(54) **Silicon nitride ceramic material.**

(57)     A ceramic material is composed mainly of silicon nitride and includes a sintering additive of at least one of aluminum oxide, yttrium oxide, ytterbium oxide, lanthanum oxide, neodymium oxide, and cerium oxide. The mixture of the silicon nitride and the sintering additive is sintered in a nitrogen gas atmosphere at a temperature higher than the temperature at which the ceramic material reaches a maximum density. The ceramic material thus sintered has an increased thermal conductivity.

EP 0 661 245 A2

The present invention relates to a ceramic material composed mainly of silicon nitride ($Si_3N_4$).

Ceramic materials composed mainly of silicon nitride ($Si_3N_4$) are used as materials of various mechanical parts because they have low density, high hardness, and high strength at elevated temperatures, and small coefficients of thermal expansion, and do not corrode metals when kept in contact therewith.

It is known that a ceramic material composed only of silicon nitride is not of a sufficiently dense structure. Therefore, it has been customary to add sintering additives to silicon nitride when it is sintered. For example, Japanese patent publication No. 49-21091 discloses use of aluminum oxide ($Al_2O_3$) or yttrium oxide ($Y_2O_3$) as sintering additives. It also has been practiced to use sintering additives of ytterbium oxide ($Yb_2O_3$), lanthanum oxide ($La_2O_3$), neodymium oxide ($Ld_2O_3$), cerium oxide ($Ce_2O_3$), and so on.

As described in the above publication, ceramic materials composed mainly of silicon nitride are sintered at a temperature ranging from 1400 to 1900°C. This is because little sintering reaction progresses at temperatures below 1400°C and the decomposition of silicon nitride is activated at temperatures above 1900°C, resulting in a reduction of density.

For the above reason, it has heretofore been the practice to set an upper sintering temperature limit to a temperature which is slightly lower than the temperature at which the density of a sintered body reaches a maximum level. Specifically, the upper sintering temperature limit for ceramic materials composed mainly of silicon nitride is usually set to 1850°C.

The upper sintering temperature limit has been set only in view of the density of a sintered body.

However, if ceramic materials are used in contact with metallic components, then the thermal conductivity of the ceramic materials plays a highly important role. Specifically, in case of a tribological use, if the thermal conductivity of a ceramic material is too low, the heat generated on an interface between the ceramic material and a metallic tribocouple held in contact therewith will not sufficiently be radiated, causing the metallic tribocouple to be highly worn or adhere due to the heat. Consequently, there is a certain limitation on the range of locations where components of ceramic materials can be used.

It is therefore an object of the present invention to provide a ceramic material composed mainly of silicon nitride, which has an improved thermal conductivity.

According to the present invention, there is provided a ceramic material comprising silicon nitride and a sintering additive of at least one of aluminum oxide, yttrium oxide, ytterbium oxide, lanthanum oxide, neodymium oxide, and cerium oxide, the sintering additive being added in an amount ranging from 2 to 10 weight %, the ceramic material being sintered at a temperature which is higher than the temperature at which the ceramic material reaches a maximum density by 0 to 150°C.

Preferably, 2.5 weight % of yttrium oxide and 1.0 weight % of aluminum oxide are added as the sintering additive. Alternatively, 5.0 weight % of yttrium oxide and 3.0 weight % of aluminum oxide are added as the sintering additive. Further alternatively, 7.0 weight % of yttrium oxide and 7.0 weight % of aluminum oxide are added as the sintering additive.

The ceramic material thus sintered has an increased thermal conductivity without suffering a substantial reduction of the density thereof.

The above and other objects, features, and advantages of the present invention will become apparent from the following description when taken in conjunction with the accompanying drawings which illustrate preferred embodiments of the present invention by way of example.

FIG. 1 is a graph showing the relationship between the sintering temperature, density, and thermal conductivity of a ceramic material which contains 3.5 weight % of sintering additives added thereto;

FIG. 2 is a graph showing the relationship between the sintering temperature, density, and thermal conductivity of a ceramic material which contains 8 weight % of sintering additives added thereto; and

FIG. 3 is a graph showing the relationship between the sintering temperature, density, and thermal conductivity of a ceramic material which contains 14 weight % of sintering additives added thereto.

Ceramic materials composed mainly of silicon nitride were produced as follows:

Materials which are listed below were prepared and sintered.

| | |
|---|---|
| Main material: | Silicon nitride ($Si_3N_4$) containing $1.5 \sim 2.0$ % of oxygen |
| | Particle diameter: 1 μm (specific surface area of 7 m²/g) |
| Sintering additive: | Aluminum oxide ($Al_2O_3$) (particle diameter: 0.38 μm, specific surface area: 7.0 m²/g); |
| | Yttrium oxide ($Y_2O_3$) (particle diameter: 0.4 μm, specific surface area: 0.8 m²/g); |
| | Ytterbium oxide ($Yb_2O_3$) (particle diameter: 0.4 μm, specific surface area: 6.7 m²/g); |
| | Lanthanum oxide ($La_2O_3$) (particle diameter: 0.4 μm, specific surface area: 6.7 m²/g); |
| | Neodymium oxide ($Ld_2O_3$) (particle diameter: 0.4 μm, specific surface area: 6.9 |

$m^2/g$); and

Cerium oxide ($Ce_2O_3$) (particle diameter: 0.4 $\mu$m, specific surface area: 7.2 $m^2/g$).

The above materials were mixed as follows: 100 g of ethanol, 100 g of the silicon nitride, and at least one of the sintering additives were placed in a 500-liter pot of a ball mill, and 100 g of stirring balls of silicon nitride was also put in the pot. The materials were then mixed in the pot which rotated at 300 rpm for 60 hours. The mixture was then dried by an evaporator until it became a powder. The powder was granulated with a sieve of 0.5 mm. The granular mixture was then shaped into a body having dimensions of 35 mm $\times$ 50 mm $\times$ 7 mm by a molding press under a pressure of 1 ton/cm$^2$, and processed by a cold isostatic press (CIP) under a pressure of 3 tons/cm$^2$ for 1 minute. The molded body or green body was sintered at a temperature ranging from 1600 to 2000°C in a nitrogen gas ($N_2$) atmosphere under a pressure of 1 kg/cm$^2$ using a packing coke of $\beta$-$Si_3N_4$ (50 %) + BN (50 %).

The sintering additives were prepared in combinations given in Table below, weighed and added to the main material.

EP 0 661 245 A2

Table

| | (A) | Sintering additive | | | | | | (B) | (C) | (D) |
| | | Ingredient 1 | Added amount (%) | Ingredient 2 | Added amount (%) | Ingredient 3 | Added amount (%) | | | |
|---|---|---|---|---|---|---|---|---|---|---|
| <4wt% | 0 | $Y_2O_3$ | 2.5 | $Al_2O_3$ | 1 | None | – | 3.5 | 34.0 | |
| | 0 | $La_2O_3$ | 2.5 | None | – | None | – | 2.5 | 35.0 | |
| | 0 | $Yb_2O_3$ | 1.0 | $Y_2O_3$ | 1 | $La_2O_3$ | 1 | 3.0 | 35.1 | |
| | 100 | $Y_2O_3$ | 2.5 | $Al_2O_3$ | 1 | None | – | 3.5 | 39.7 | 5.7 |
| | 100 | $La_2O_3$ | 2.5 | None | – | None | – | 2.5 | 39.7 | 4.7 |
| | 100 | $Yb_2O_3$ | 1.0 | $Y_2O_3$ | 1 | $La_2O_3$ | 1 | 3.0 | 39.5 | 4.4 |
| 5 ~ 10wt% | 0 | $Nd_2O_3$ | 5.0 | $Al_2O_3$ | 3 | None | – | 8.0 | 35.4 | |
| | 0 | $La_2O_3$ | 7.0 | $Al_2O_3$ | 1 | None | – | 8.0 | 34.9 | |
| | 0 | $La_2O_3$ | 2.0 | $Ce_2O_3$ | 2 | $Al_2O_3$ | 2 | 6.0 | 33.2 | |
| | 0 | $Yb_2O_3$ | 6.0 | $Al_2O_3$ | 3 | $Y_2O_3$ | 1 | 10.0 | 34.6 | |
| | 0 | $Y_2O_3$ | 5.0 | $Al_2O_3$ | 3 | None | – | 8.0 | 33.6 | |
| | 0 | $Y_2O_3$ | 3.0 | $Al_2O_3$ | 5 | None | – | 8.0 | 32.4 | |
| | 150 | $Nd_2O_3$ | 5.0 | $Al_2O_3$ | 3 | None | – | 8.0 | 38.2 | 2.8 |
| | 150 | $La_2O_3$ | 7.0 | $Al_2O_3$ | 1 | None | – | 8.0 | 37.8 | 2.9 |
| | 150 | $La_2O_3$ | 2.0 | $Ce_2O_3$ | 2 | $Al_2O_3$ | 2 | 6.0 | 38.5 | 5.3 |
| | 150 | $Yb_2O_3$ | 6.0 | $Al_2O_3$ | 3 | $Y_2O_3$ | 1 | 10.0 | 39.1 | 4.5 |
| | 150 | $Y_2O_3$ | 5.0 | $Al_2O_3$ | 3 | None | – | 8.0 | 38.8 | 5.2 |
| | 150 | $Y_2O_3$ | 3.0 | $Al_2O_3$ | 5 | None | – | 8.0 | 37.1 | 4.7 |
| > 11wt% | 0 | $Yb_2O_3$ | 5.0 | $Y_2O_3$ | 2 | $Al_2O_3$ | 4 | 11.0 | 33.1 | |
| | 0 | $La_2O_3$ | 12.0 | $Al_2O_3$ | 5 | None | – | 17.0 | 33.5 | |
| | 0 | $Ce_2O_3$ | 10.0 | $Al_2O_3$ | 10 | None | – | 20.0 | 31.7 | |
| | 0 | $Y_2O_3$ | 7.0 | $Al_2O_3$ | 7 | None | – | 14.0 | 34.4 | |
| | 150 | $Yb_2O_3$ | 5.0 | $Y_2O_3$ | 2 | $Al_2O_3$ | 4 | 11.0 | 33.5 | 0.4 |
| | 150 | $La_2O_3$ | 12.0 | $Al_2O_3$ | 5 | None | – | 17.0 | 33.9 | 0.4 |
| | 150 | $Ce_2O_3$ | 10.0 | $Al_2O_3$ | 10 | None | – | 20.0 | 32.2 | 0.5 |
| | 150 | $Y_2O_3$ | 7.0 | $Al_2O_3$ | 7 | None | – | 14.0 | 34.9 | 0.5 |

(A): A temperature increase from the temperature at which the maximum density is reached (°C);

(B): Total amount of sintering additives used (%);

(C): Thermal conductivity (W/m·K); and

(D): An increase in the thermal conductivity (W/m·K).

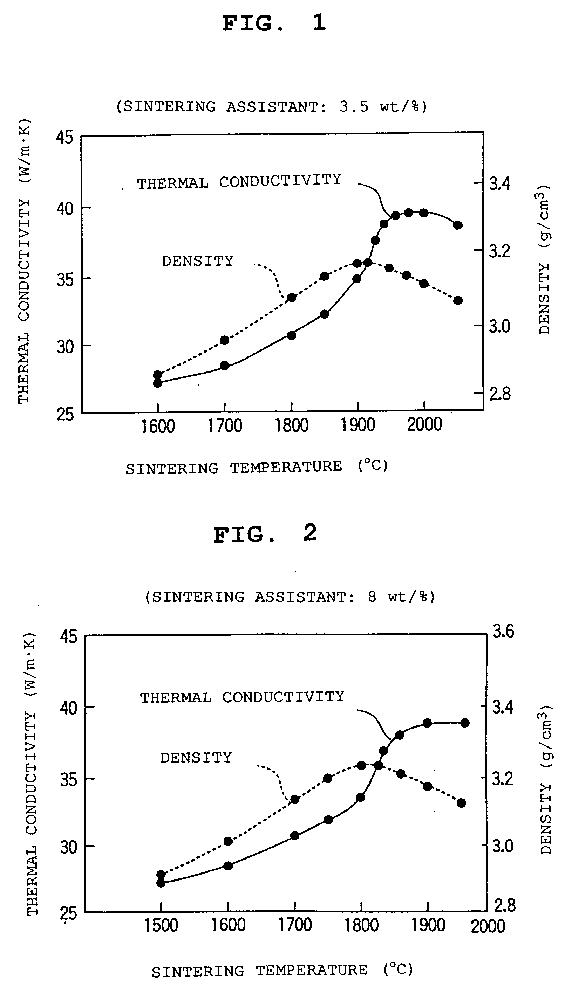

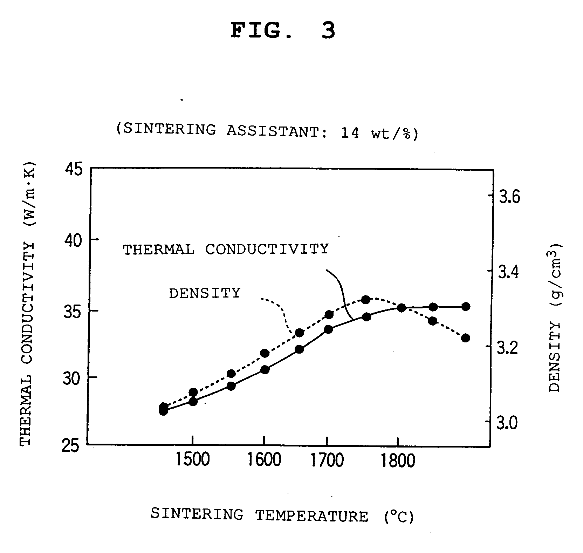

The densities (kg/cm³) and thermal conductivities (W/m·K) of the sintered bodies produced under the

4

above conditions are shown in FIGS. 1 through 3. In the unit of the thermal conductivity, "W" represents for Watt, "m" meter, and "K" temperature. The thermal conductivities were measured at room temperature by the laser flashing method. In FIG. 1, 2.5 weight % of $Y_2O_3$ and 1.0 weight % of $Al_2O_3$ were used as sintering additives. In FIG. 2, 5.0 weight % of $Y_2O_3$ and 3.0 weight % of $Al_2O_3$ were used as sintering additives. In FIG. 3, 7.0 weight % of $Y_2O_3$ and 7.0 weight % of $Al_2O_3$ were used as sintering additives.

It can be seen from FIGS. 1 through 3 that the thermal conductivity increases when the sintering temperature is higher than the temperature at which the maximum density of the sintered body is reached. The thermal conductivity increases greatly especially when the amount of an added sintering additive ranges from 2 to 10 weight % and the temperature increase from the temperature at which the maximum density is reached is in the range of from 0 to 150°C.

If the amount of an added sintering additive were smaller than 2 weight %, then the density of the sintered body would suffer an insufficient density, making it difficult for the sintered body to keep its desired shape. If the amount of an added sintering additive were in excess of 10 weight %, then the thermal conductivity would not be further increased.

When the sintering temperature increases, the thermal conductivity of the ceramic material increases for the following reasons: As the sintering temperature increases, the sintering additive is sublimated or evaporated, developing a solid-phase reaction between silicon nitride molecules. The bonding between silicon nitride molecules now changes from an ionic bond to a covalent bond, which exhibits a better thermal conductivity. Another reason is that an obstacle presented to thermal transfer by the grain boundary is reduced as a columnar crystal grows. However, ceramic materials that are sintered at extremely high temperatures contain are highly porous owing to a decomposition reaction, and have a very low thermal conductivity.

Table given above indicates that the advantages which can be seen from FIGS. 1 through 3 can be obtained when other sintering additives than $Y_2O_3$ and $Al_2O_3$ are used. Furthermore, it can be presumed that the same advantages can be attained when magnesium oxide (MgO) and strontium oxide ($SrO_2$) are used as sintering additives.

As described above, the thermal conductivity of a ceramic material composed mainly of silicon nitride can be increased when the ceramic material is sintered at a temperature higher than the temperature at which the maximum density of the ceramic material is reached. If the ceramic material thus sintered is used as a mechanical part held in contact with a metallic part, then it can efficiently and effectively dissipate heat produced by contacting surfaces of those parts. Consequently, the ceramic material finds a wide range of applications.

As can be seen from FIGS. 1 through 3, it is preferable to add a sintering additive in an amount which ranges from 2 to 10 weight % and sinter the material at a temperature which is higher than the temperature at which the maximum density is reached by 0 to 150°C, for increasing the thermal conductivity of the sintered material without causing a substantial reduction in the density of the sintered material.

Although certain preferred embodiments of the present invention has been shown and described in detail, it should be understood that various changes and modifications may be made therein without departing from the scope of the appended claims.

## Claims

1. A ceramic material comprising silicon nitride and a sintering additive of at least one of aluminum oxide, yttrium oxide, ytterbium oxide, lanthanum oxide, neodymium oxide, and cerium oxide, said sintering additive being added in an amount ranging from 2 to 10 weight %, said ceramic material being sintered at a temperature which is higher than the temperature at which the ceramic material reaches a maximum density by 0 to 150°C.

2. A ceramic material according to claim 1, wherein 2.5 weight % of yttrium oxide and 1.0 weight % of aluminum oxide are added as the sintering additive.

3. A ceramic material according to claim 1, wherein 5.0 weight % of yttrium oxide and 3.0 weight % of aluminum oxide are added as the sintering additive.

4. A ceramic material according to claim 1, wherein 7.0 weight % of yttrium oxide and 7.0 weight % of aluminum oxide are added as the sintering additive.

5. A method of preparing a ceramic material comprising sintering silicon nitride and a sintering additive of at least one of aluminum oxide, yttrium oxide, ytterbium oxide, lanthanum oxide, neodymium oxide, and cerium oxide, said sintering additive being present in an amount of 2 to 10 weight %, at a temperature which is highei by 0 to 150° C than the temperature at which the ceramic material reaches a maximum density.

# FIG. 1

(SINTERING ASSISTANT: 3.5 wt/%)

SINTERING TEMPERATURE (°C)

# FIG. 2

(SINTERING ASSISTANT: 8 wt/%)

SINTERING TEMPERATURE (°C)

7

# FIG. 3

(SINTERING ASSISTANT: 14 wt/%)